# EUROPEAN PATENT APPLICATION

(11) **EP 0 848 328 A1**
(43) Date of publication of application: **17.06.1998**
(21) Application number: 97309005.3
(22) Date of filing: 10.11.1997
(51) Int. Cl.: G06F 11/00

(54) **Method, apparatus and program storage device for operating nonstandard peripheral device**

(30) Priority: 16.12.1996 JP 335506/96
(71) Applicant: TEIJIN SEIKI COMPANY LIMITED, Osaka (JP)
(72) Inventor: Chiba, Takahiro, c/o Teijin Seiki Co Ltd, Fuwa-gun, Gifu-ken (JP)
(74) Representative: Pacitti, Pierpaolo A.M.E.

(57) **Abstract**

Herein disclosed is a peripheral device operation apparatus (7, 10) for enabling a nonstandard peripheral device (2, 3) to communicate with a calculation machine (1). The calculation machine (1) includes a basic input/output system (5) ("BIOS") for communicating with a predetermined standard peripheral device. The peripheral device operation apparatus (7, 10) comprises identification means (8, 11) and conversion means (9, 12). The identification means (8, 11) instructs the BIOS to identify the nonstandard peripheral device (2, 3) as the standard peripheral device. The conversion means (9, 12) is designed to convert data transmitted between the nonstandard peripheral device (2, 3) and the calculation machine (1) to data formats appropriate to the nonstandard peripheral device (2, 3) and the calculation machine (1), respectively. Thus constructed peripheral device operation apparatus (7, 10) enables the nonstandard peripheral device (2, 3) to easily communicate with the calculation machine (1) without particular preparations.

## Description

### BACKGROUND OF THE INVENTION

### 1. Field of the Invention

The present invention relates to a method of and an apparatus for enabling a nonstandard peripheral device to communicate with a calculation machine such as a personal computer or a workstation, and a program storage device storing therein a program for enabling the nonstandard peripheral device to communicate with the calculation machine.

### 2. Description of the Related Art

In general, a typical computer is associated with various peripheral devices to perform various functions. The peripheral devices include not only standard peripheral devices such as keyboards, floppy disk drives and hard disk drives, but also nonstandard peripheral devices such as in-circuit emulators, ROM debuggers and logic analyzers.

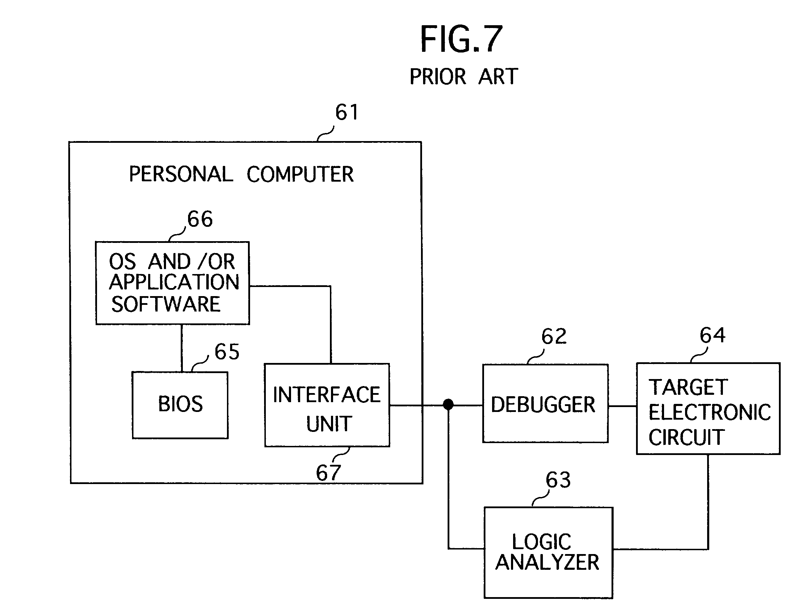

In FIG. 7 of the drawings, there is shown a conventional computer system which comprises a personal computer 61, a debugger 62 such as an in-circuit emulator (hereinlater referred to simply as "ICE") and a logic analyzer 63. The debugger 62 and the logic analyzer 63 are coupled with a target electronic circuit 64. The target electronic circuit 64 is tested by the debugger 62 and analyzed by the logic analyzer 63. The debugger 62 and the logic analyzer 63 are further coupled with the personal computer 61 and operated by a user through the personal computer 61.

The personal computer 61 includes a basic input/output system (hereinlater referred to simply as "BIOS") 65 for enabling standard peripheral devices (not shown) to communicate with the personal computer 61 as described above. The BIOS 65 is designed to identify the standard peripheral devices thereby allowing the standard peripheral devices to communicate with the personal computer 61 without particular preparations and operations by a specially skilled person. The standard peripheral device may be conformed to a so-called plug and play device (hereinlater referred to simply as "PnP device"), while the nonstandard peripheral device is not conformed to the PnP device. The personal computer 61 comprises operating system (hereinlater referred to simply as "OS") and/or application software 66. The OS and/or application software 66 includes general purpose application programs which are executed to access the standard peripheral devices such as a hard disk drive. The OS and/or application software 66 is executed by the personal computer 61 under the control of the BIOS 65, so that the standard peripheral devices can be operated by the user with aid of the personal computer 61.

However, the general purpose application programs of the OS and/or application software 66 cannot be executed for the sake of the operation of the nonstandard peripheral devices because of the fact that the BIOS 65 cannot identify and communicate with the nonstandard peripheral device without particular preparations and operations. As a result, the computer system 61 should be provided with particular application programs for operating the nonstandard peripheral devices, respectively, as will be described hereinlater.

When the nonstandard peripheral devices are used with the personal computer 61, it is necessary for the user to construct the computer system in the particular environment with special knowledge of the nonstandard peripheral devices and to comprise particular constitutional elements. As shown in FIG. 7, the computer system comprises an interface unit 67 for allowing the personal computer 61 and the nonstandard peripheral device to communicate with each other. The interface unit 67 has interface boards and particular application programs such as device drivers for operating the nonstandard peripheral devices. The interface board may be replaced with a card type of device. The particular application program has an architecture specialized depending on the OS and/or application software 66 and each of the nonstandard peripheral devices.

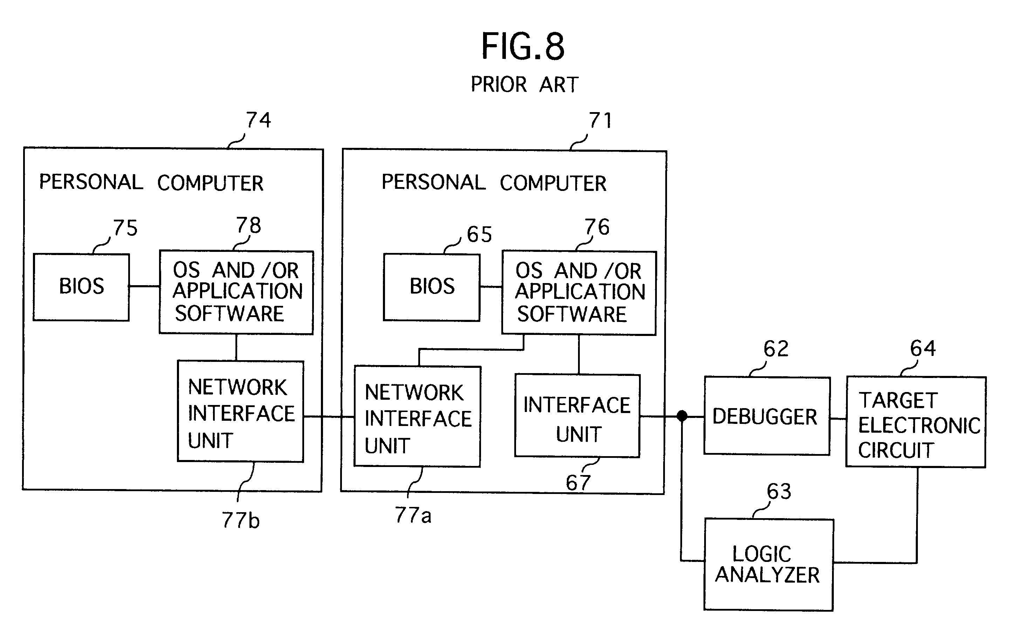

FIG. 8 shows a conventional network system as comprising first and second personal computers 71 and 74, a debugger 72, a logic analyzer 73 and a target electronic circuit 84. The debugger 72, the logic analyzer 73 and the target electronic circuit 84 shown in FIG. 8 are same in construction as the debugger 62, the logic analyzer 63 and the target electronic circuit 64, respectively, shown in FIG. 7.

The first personal computer 71 comprises a BIOS 85, an interface unit 87, a network interface unit 77a and OS and/or application software 76. The BIOS 85 and the interface unit 87 shown in FIG. 8 are respectively identical to the BIOS 65 and the interface unit 67 shown in FIG. 7. The second personal computer 74 comprises a network interface unit 77b, a BIOS 75 and OS and/or application software 78. The network interface units 77a and 77b of the first and second personal computers 71 and 74 are linked with one another to construct a network. The network may be such as a local area network (hereinlater referred to simply as "LAN") or a wide area network (hereinlater referred to simply as "WAN"). Each of the network interface units 77a and 77b of the first and second personal computers 71 and 74 may include a network operating system (hereinlater referred to simply as "NOS") and a network interface board.

The OS and/or application software 76 of the first personal computer 71 includes two client server programs which are used for the debugger 62 and the logic analyzer 63, respectively. Likewise, the OS and/or application software 78 of the second personal computer 74 includes two client server programs which are used for the debugger 62 and the logic analyzer 63, respectively. Owing to the client server programs, the first and second personal computers 71 and 74 can share, with each other, the debugger 62 and the logic analyzer 63 on the network. When the first personal computer 71 and the second personal computer 74 serve as a server and a client, respectively, the first personal computer 71 has resources which can be shared with the second personal computer 74. The first personal computer 71 provides the resources for the second personal computer 74 in response to requests transmitted from the second personal computer 74.

Therefore, the second personal computer 74 can operate the debugger 62 or the logic analyzer 63 only on the basis of the resources transmitted from the first personal computer 71. In other words, the second personal computer 74 cannot directly operate the debugger 62 or the logic analyzer 63.

A drawback is, however, encountered in a prior-art computer system of the above described nature in that the personal computer cannot operate the nonstandard peripheral device without particular preparations and operations, because of the fact that the personal computer cannot identify the nonstandard peripheral device.

Furthermore, another drawback encountered in the prior-art computer system on the network of the above described nature in which the computers on the network are requested to have client server programs which are prepared for the nonstandard peripheral devices, respectively.

### SUMMARY OF THE INVENTION

It is an object of the present invention to provide a peripheral device operation apparatus for enabling a nonstandard peripheral device to communicate with a calculation machine such as a personal computer or a workstation without particular preparations and operations by a user.

It is another object of the present invention to provide a nonstandard peripheral device which can be controlled by a calculation machine without particular preparations and operations by a user.

It is a further object of the present invention to provide a peripheral device operation method of enabling a nonstandard peripheral device to communicate with a calculation machine without particular preparations and operations by a user.

It is a yet object of the present invention to provide a program storage device storing therein a program executed by a peripheral device operation apparatus to perform a method of enabling a nonstandard peripheral device to communicate with a calculation machine with ease.

It is a further yet object of the present invention to provide a peripheral device operation apparatus comprising a peripheral device operation unit and a calculation machine coupled with and controlling a nonstandard peripheral device without particular preparations and operations by a user.

In accordance with a first aspect of the present invention, there is provided a peripheral device operation apparatus for enabling a nonstandard peripheral device to communicate with a calculation machine such as a personal computer or a workstation. The calculation machine includes a basic input/output system for communicating with a predetermined standard peripheral device. The peripheral device operation apparatus comprises identification means for instructing the basic input/output system of the calculation machine to identify the nonstandard peripheral device as the standard peripheral device. The peripheral device operation apparatus further comprises conversion means for converting data received from the nonstandard peripheral device to a data format appropriate to the standard peripheral device to transmit the data from the nonstandard peripheral device to the basic input/output system of the calculation machine, and converting data received from the basic input/output system of the calculation machine to a data format appropriate to the nonstandard peripheral device to transmit the data from the basic input/output system of the calculation machine to the nonstandard peripheral device.

The calculation machine is referred to as a first calculation machine and is connected to another calculation machine referred to as a second calculation machine. The second calculation machine includes a basic input/output system for communicating with the standard peripheral device. The peripheral device operation apparatus comprises enabling means for enabling the first and second calculation machines to share the standard peripheral device with each other, and recognition means for recognizing the nonstandard peripheral device as the standard peripheral device to communicate the nonstandard peripheral device through the first calculation machine.

Alternatively, the identification means may instruct the basic input/output system of the second calculation machine to identify the nonstandard peripheral device as the standard peripheral device. The conversion means may convert data received from the nonstandard peripheral device to a data format appropriate to the standard peripheral device to transmit the data from the nonstandard peripheral device to the basic input/output system of the second calculation machine, and convert data received from the basic input/output system of the second calculation machine to a data format appropriate to the nonstandard peripheral device to transmit the data from the basic input/output system of the second calculation machine to the nonstandard peripheral device.

The identification means of the peripheral device operation apparatus may instruct the basic input/output system of the calculation machine to identify the nonstandard peripheral device as a standard storage device. The nonstandard peripheral device may be a logic analyzer. The nonstandard peripheral device may be a debugger such as an in-circuit emulator and a ROM debugger.

In accordance with a second aspect of the present invention, there is provided a nonstandard peripheral device controlled by a calculation machine such as a personal computer or a workstation. The calculation machine includes a basic input/output system for communicating with a predetermined standard peripheral device. The nonstandard peripheral device comprises identification means for instructing the basic input/output system of the calculation machine to identify the nonstandard peripheral device as the standard peripheral device. The nonstandard peripheral device further comprises conversion means for converting data received from the nonstandard peripheral device to a data format appropriate to the standard peripheral device to transmit the data from the nonstandard peripheral device to the basic input/output system of the calculation machine and converting data received from the basic input/output system of the calculation machine to a data format appropriate to the nonstandard peripheral device to transmit the data from the basic input/output system of the calculation machine to the nonstandard peripheral device.

The identification means of the nonstandard peripheral device may instruct the basic input/output system of the calculation machine to identify the nonstandard peripheral device as a standard storage device. The nonstandard peripheral device may partially form a logic analyzer. The nonstandard peripheral device may partially forms a debugger such as an in-circuit emulator and a ROM debugger.

In accordance with a third aspect of the present invention, there is provided a peripheral device operation method of enabling a nonstandard peripheral device to communicate with a calculation machine such as a personal computer or a workstation. The calculation machine includes a basic input/output system for communicating with a predetermined standard peripheral device. The peripheral device operation method comprises the steps of: instructing the basic input/output system of the calculation machine to identify the nonstandard peripheral device as the standard peripheral device; converting data received from the nonstandard peripheral device to a data format appropriate to the standard peripheral device to transmit the data from the nonstandard peripheral device to the basic input/output system of the calculation machine; and converting data received from the basic input/output system of the calculation machine to a data format appropriate to the nonstandard peripheral device to transmit the data from the basic input/output system of the calculation machine to the nonstandard peripheral device.

The calculation machine may be referred to as a first calculation machine and is connected to another calculation machine referred to as a second calculation machine. The second calculation machine includes a basic input/output system for communicating with the standard peripheral device. The method comprises the steps of: enabling the first and second calculation machines to share the standard peripheral device with each other; making the basic input/output system of the second calculation machine recognize the nonstandard peripheral device as the standard peripheral device to communicate the nonstandard peripheral device through the first calculation machine.

Alternatively, the identification step may include the step of instructing the basic input/output system of the second calculation machine to identify the nonstandard peripheral device as the standard peripheral device. The conversion step has the steps of: converting data received from the nonstandard peripheral device to a data format appropriate to the standard peripheral device to transmit the data from the nonstandard peripheral device to the basic input/output system of the second calculation machine; and converting data received from the basic input/output system of the second calculation machine to a data format appropriate to the nonstandard peripheral device to transmit the data from the basic input/output system of the second calculation machine to the nonstandard peripheral device.

In accordance with a fourth aspect of the present invention, there is provided a program storage device storing therein a program executed by a peripheral device operation apparatus to perform a method of enabling a nonstandard peripheral device to communicate with a calculation machine such as a personal computer or a workstation. The calculation machine includes a basic input/output system for communicating with a predetermined standard peripheral device. The method comprises the steps of: instructing the basic input/output system of the calculation machine to identify the nonstandard peripheral device as the standard peripheral device; converting data received from the nonstandard peripheral device to a data format appropriate to the standard peripheral device to transmit the data from the nonstandard peripheral device to the basic input/output system of the calculation machine; and converting data received from the basic input/output system of the calculation machine to a data format appropriate to the nonstandard peripheral device to transmit the data from the basic input/output system of the calculation machine to the nonstandard peripheral device.

The calculation machine may be referred to as a first calculation machine and be connected to another calculation machine referred to as a second calculation machine. The second calculation machine includes a basic input/output system for communicating with the standard peripheral device. The method comprises the steps of: enabling the first and second calculation machines to share the standard peripheral device with each other; making the basic input/output system of the second calculation machine recognize the nonstandard peripheral device as the standard peripheral device to communicate the nonstandard peripheral device through the first calculation machine.

Alternatively, the identification step may have the step of instructing the basic input/output system of the second calculation machine to identify the nonstandard peripheral device as the standard peripheral device. The conversion step includes the steps of: converting data received from the nonstandard peripheral device to a data format appropriate to the standard peripheral device to transmit the data from the nonstandard peripheral device to the basic input/output system of the second calculation machine; and converting data received from the basic input/output system of the second calculation machine to a data format appropriate to the nonstandard peripheral device to transmit the data from the basic input/output system of the second calculation machine to the nonstandard peripheral device.

In accordance with a fifth aspect of the present invention, there is provided a program storage device storing therein a program executed by a nonstandard peripheral device to perform a method of enabling the nonstandard peripheral device to communicate with a calculation machine such as a personal computer or a workstation. The calculation machine includes a basic input/output system for communicating with a predetermined standard peripheral device. The method comprises the steps of: instructing the basic input/output system of the calculation machine to identify the nonstandard peripheral device as the standard peripheral device; converting data received from the nonstandard peripheral device to a data format appropriate to the standard peripheral device to transmit the data from the nonstandard peripheral device to the basic input/output system of the calculation machine; and converting data received from the basic input/output system of the calculation machine to a data format appropriate to the nonstandard peripheral device to transmit the data from the basic input/output system of the calculation machine to the nonstandard peripheral device.

In accordance with a sixth aspect of the present invention, there is provided a peripheral device operation apparatus comprising a calculation machine coupled with a nonstandard peripheral device through a peripheral device operation unit for enabling the nonstandard peripheral device to communicate with the calculation machine such as a personal computer or a workstation. The calculation machine includes a basic input/output system for communicating with a predetermined standard peripheral device. The peripheral device operation unit comprises identification means for instructing the basic input/output system of the calculation machine to identify the nonstandard peripheral device as the standard peripheral device. The peripheral device operation unit further comprises conversion means for converting data received from the nonstandard peripheral device to a data format appropriate to the standard peripheral device to transmit the data from the nonstandard peripheral device to the basic input/output system of the calculation machine and converting data received from the basic input/output system of the calculation machine to a data format appropriate to the nonstandard peripheral device to transmit the data from the basic input/output system of the calculation machine to the nonstandard peripheral device.

### BRIEF DESCRIPTION OF THE DRAWINGS

The present invention and many of the attendant advantages thereof will be better understood from the following detailed description when considered in connection with the accompanying drawings, wherein:
FIG. 1 is a block diagram showing a first embodiment of a peripheral device operation system according to the present invention;
FIG. 2 is a memory map representing a structure of a storage device of the debugger shown in FIG. 1;
FIG. 3(a) is a memory map representing a structure of a storage device of an ICE;
FIG. 3(b) is a memory map representing a structure of a virtual drive corresponding to a target ROM area of the ICE shown in FIG. 3(a);
FIG. 3(c) is a memory map representing a structure of a virtual drive corresponding to a target RAM area of the ICE shown in FIG. 3(a);
FIG. 4 is a block diagram showing a second embodiment of the peripheral device operation system according to the present invention;
FIG. 5 is a block diagram showing a third embodiment of the peripheral device operation system according to the present invention;
FIG. 6 is an overall outline flowchart showing a flow of processes common to the first through third embodiments of the peripheral device operation systems according to the present invention;
FIG. 7 is a block diagram showing a prior art computer system operating a nonstandard peripheral device; and
FIG. 8 is a block diagram showing a prior art network system comprising calculation machines linked with each other and sharing a nonstandard peripheral device.

### DESCRIPTION OF THE PREFERRED EMBODIMENTS

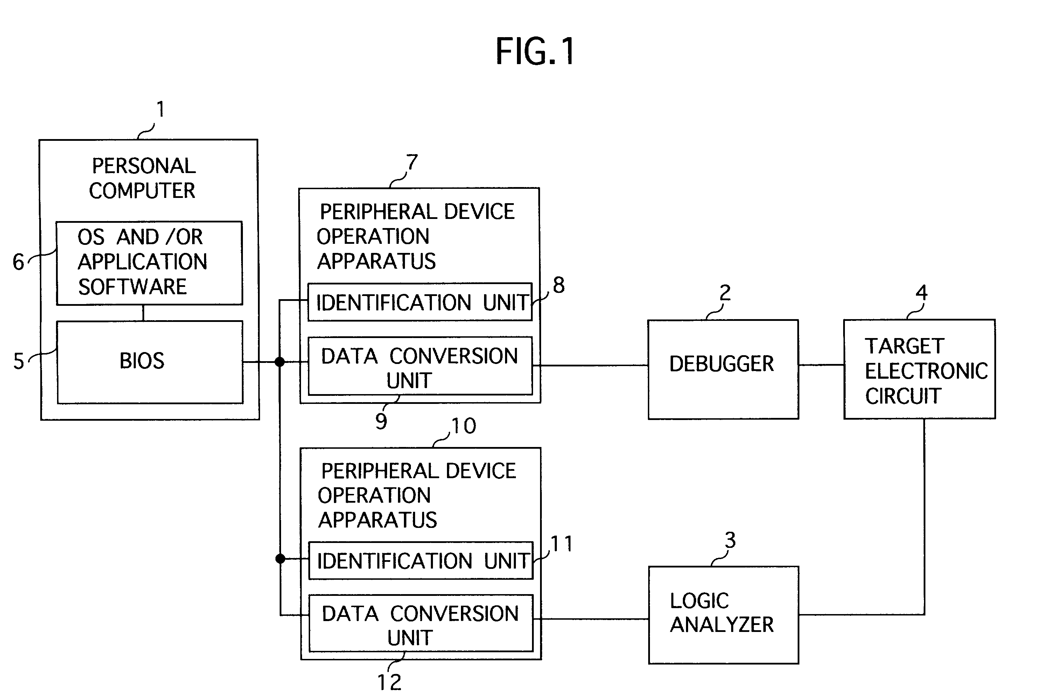

Referring to FIGS. 1 to 3 of the drawings, there is shown a first preferred embodiment of a peripheral device operation system according to the present invention which will be described hereinlater.

FIG. 1 is a block diagram showing the first embodiment of the peripheral device operation system comprising a personal computer 1 and first and second peripheral device operation apparatuses 7 and 10. Each of the first and second peripheral device operation apparatuses 7 and 10 is designed to enable nonstandard peripheral devices to communicate with the personal computer 1. In the present embodiment, the nonstandard peripheral devices are constituted by a debugger 2 and a logic analyzer 3, respectively. The debugger 2 is, for example, an ICE and a ROM debugger. The nonstandard peripheral devices may be any other devices except standard peripheral devices. The personal computer 1 is coupled with the debugger 2 through the first peripheral device operation apparatus 7. The personal computer 1 is further coupled with the logic analyzer 3 through the second peripheral device operation apparatus 10.

The personal computer 1 may be replaced with another calculation machine such as a workstation. In this embodiment, the personal computer 1 has a BIOS 5 for communicating with predetermined standard peripheral devices (not shown) including such as floppy disk drives, hard disk drives and keyboards. The personal computer 1 further has OS and/or application software 6 including OS and general purpose application programs capable of operating the standard peripheral devices.

The first peripheral device operation apparatus 7 comprises an identification unit 8 and a data conversion unit 9. The identification unit 8 of the first peripheral device operation apparatus 7 is connected to the personal computer 1. The data conversion unit 9 of the first peripheral device operation apparatus 7 is connected at its one side to the personal computer 1 and at its the other side to the debugger 2. The identification unit 8 of the first peripheral device operation apparatus 7 is designed to instruct the BIOS 5 of the personal computer 1 to identify the debugger 2 as the standard peripheral device. The data conversion unit 9 of the first peripheral device operation apparatus 7 is designed to convert data received from the debugger 2 to a data format appropriate to the BIOS 5 of the personal computer 1 to transmit the data from the debugger 2 to the BIOS 5 of the personal computer 1. The data conversion unit 9 of the first peripheral device operation apparatus 7 is also designed to convert data received from the BIOS 5 of the personal computer 1 to a data format appropriate to the debugger 2 to transmit the data from the BIOS 5 of the personal computer 1 to the debugger 2.

The second peripheral device operation apparatus 10 comprises an identification unit 11 and a data conversion unit 12. The identification unit 11 of the second peripheral device operation apparatus 10 is connected to the personal computer 1. The data conversion unit 12 of the second peripheral device operation apparatus 10 is connected at its one side to the personal computer 1 and at its the other side to the logic analyzer 3. The identification unit 11 of the second peripheral device operation apparatus 10 is designed to instruct the BIOS 5 of the personal computer 1 to identify the logic analyzer 3 as the standard peripheral device. The data conversion unit 12 of the second peripheral device operation apparatus 10 is designed to convert data received from the logic analyzer 3 to a data format appropriate to the BIOS 5 of the personal computer 1 to transmit the data from the logic analyzer 3 to the BIOS 5 of the personal computer 1. The data conversion unit 12 of the second peripheral device operation apparatus 10 is also designed to convert data received from the BIOS 5 of the personal computer 1 to a data format appropriate to the logic analyzer 3 to transmit the data from the BIOS 5 of the personal computer 1 to the logic analyzer 3.

The debugger 2 is coupled with a target electronic circuit 4 and used for testing software and hardware of the target electronic circuit 4, while the logic analyzer 3 is also coupled with the target electronic circuit 4 and used for logically analyzing the target electronic circuit 4. The debugger 2 and the logic analyzer 3 respectively have volatile storage devices (not shown).

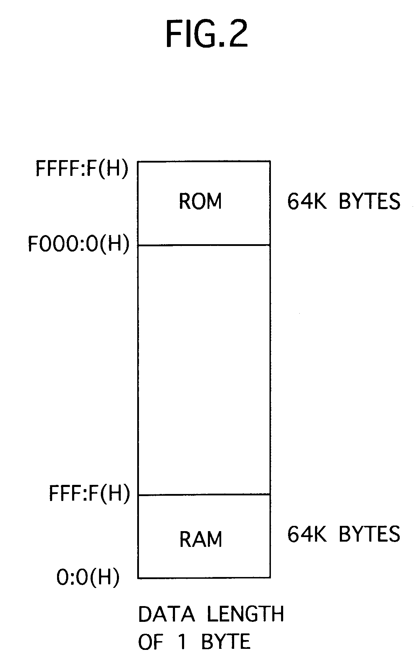

The target electronic circuit 4 has a memory unit (not shown) including a ROM and a RAM. The ROM and RAM of the target electronic circuit 4 have the same memory size of 64K bytes. The debugger 2 has a memory map into which the storage device of the debugger 2 is mapped. The memory map is shown in FIG. 2 as including a target RAM area allocated to the RAM of the target electronic circuit 4 and a target ROM area allocated to the ROM of the target electronic circuit 4. Thus, the debugger 2 can input and output data stored in the memory unit of the target electronic circuit 4 in accordance with the memory map of the debugger 2. The target RAM area of the memory map of the debugger 2 has a range from a start address "0:0(H)" to an end address "FFF:F(H)". The target ROM area of the memory map of the debugger 2 has a range from a start address "F000:0(H)" to an end address "FFFF:F(H)". The storage device of the debugger 2 has data assigned to each address of the memory map of the debugger 2 with 1 byte in length.

It will be explained below how the peripheral device operation system operates the debugger 2 and the logic analyzer 3.

In general, each of the standard peripheral devices has an identification character. The identification characters existing in one computer system are required to differ from one another. The BIOS 5 of the personal computer 1 is designed to identify the specific standard peripheral device in accordance with the identification character in order to communicate with the identified standard peripheral device.

In this embodiment, the identification unit 8 of the first peripheral device operation apparatus 7 has an identification character representing the standard peripheral device, for instance, a hard disk drive. The identification unit 11 of the second peripheral device operation apparatus 10 has another identification character representing another standard peripheral device. Thus, the BIOS 5 of the personal computer 1 can identify the debugger 2 and the logic analyzer 3 as the standard peripheral devices. The debugger 2 and the logic analyzer 3 may be referred to as "virtual standard peripheral devices".

In this embodiment, it is necessary for the personal computer 1 to access data stored in the storage device of the debugger 2, because of the fact that the personal computer 1 is designed to control the debugger 2 on the basis of the data stored in the storage device of the debugger 2. When the personal computer 1 controls the debugger 2, the personal computer 1 sends commands such as read commands and write commands to the debugger 2. When the personal computer 1 sends the read command to the debugger 2 and when the debugger 2 receives the read command, the debugger 2 returns data stored in the storage device of the debugger 2 to the personal computer 1 in response to the read command. The reason why the debugger 2 is intended to be identified as the hard disk drive in this embodiment is that the personal computer 1 needs the data stored in the storage device of the debugger 2 which can be replaced with the hard disk drive. Alternatively, the other nonstandard peripheral devices have no storage devices and are designed to communicate with the personal computer 1 on the basis of signals, e.g., states of command lines. When the other nonstandard peripheral devices are intended to communicate with the personal computer 1, the other nonstandard peripheral devices are required to be identified as other standard devices, for example, keyboards.

The data received from the debugger 2 is converted to a data format appropriate to the BIOS 5 by the data conversion unit 9 of the first peripheral device operation apparatus 7, while the data received from the BIOS 5 is converted to a data format appropriate to the debugger 2 by the data conversion unit 9 of the first peripheral device operation apparatus 7. The data received from the logic analyzer 3 is converted to a data format appropriate to the BIOS 5 by the data conversion unit 12 of the second peripheral device operation apparatus 10, while the data received from the BIOS 5 is converted to a data format appropriate to the logic analyzer 3 by the data conversion unit 12 of the second peripheral device operation apparatus 10. Consequently, the BIOS 5 can communicate with the virtual standard peripheral devices, i.e. the debugger 2 and the logic analyzer 3. This means that the personal computer 1 can execute the general purpose application programs to operate the nonstandard peripheral devices as well as the standard peripheral devices under the control of the BIOS 5.

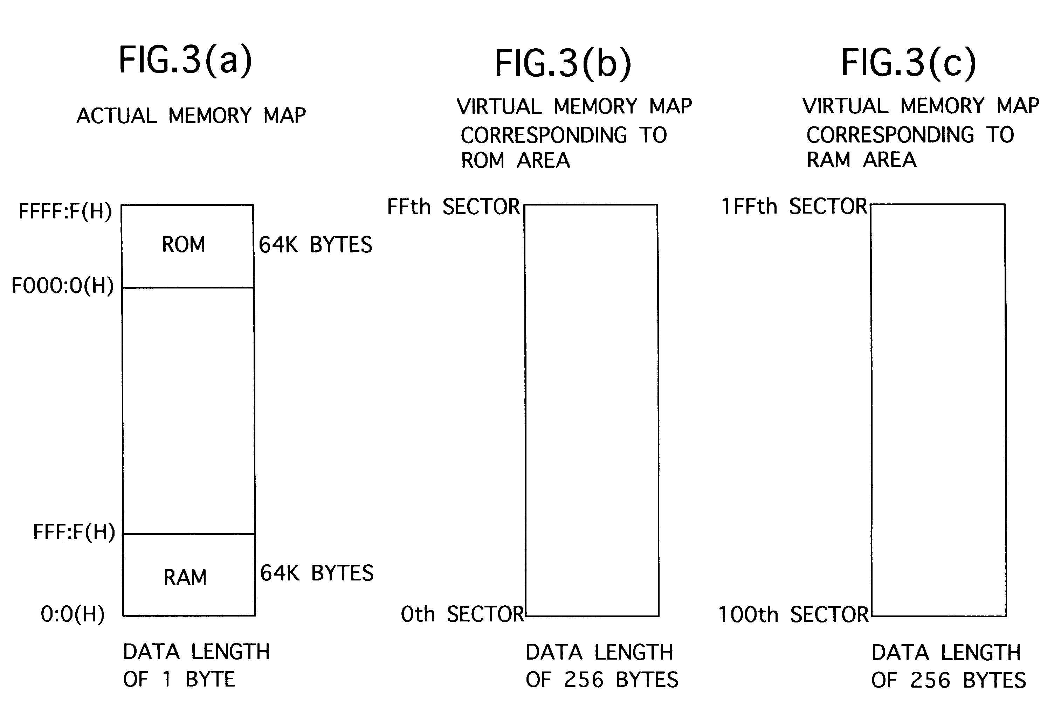

The debugger 2 may be an ICE having a storage device which is mapped into a memory map as shown in FIG. 3(a). The memory map of the ICE shown in FIG. 3(a) is similar to the memory map of the debugger 2 shown in FIG. 2. It is assumed that the memory map of the ICE shown in FIG. 3(a) is referred to as an "actual memory map" hereinlater. The target ROM and RAM areas of the storage device of the ICE are considered as virtual drives. The virtual drives corresponding to the target ROM and RAM areas of the storage device of the ICE have memory maps as shown in FIGS. 3(b) and 3(c), respectively. In this embodiment, each of the virtual drives is considered as a hard disk drive in order to utilize the general purpose application programs for operating each virtual drive. It is assumed that each of the memory maps of the virtual drives shown in FIGS. 3(b) and 3(c) is referred to as a "virtual memory map" hereinlater.

Each of the virtual drives is divided into a plurality of sectors each having a length of 256 bytes. The virtual drive corresponding to the target ROM area of the storage device of the ICE is assigned to a range between the 0th sector and the FFth sector in the virtual drive as shown in FIG. 3(b). The virtual drive corresponding to the target RAM area of the storage device of the ICE is assigned to a range between the 100th sector and the 1FFth sector in the virtual drive as shown in FIG. 3(c).

It will be understood from the following descriptions with making reference to the aforementioned memory maps shown in FIGS. 3(a) through 3(c) how the peripheral device operation system achieves the communication between the personal computer 1 and the ICE.

The personal computer 1 instructs the virtual drive to transmit data stored in the virtual drive to the personal computer 1 by sending a read command to the virtual drive. The read command is generally used for the standard peripheral device by the personal computer 1 to read the data stored in the storage device of the standard peripheral device. For instance, the read command makes the virtual drive to transmit data assigned to the 100th sector in the virtual drive. Then, the read command is converted to another read command by the data conversion unit 9 of the peripheral device operation apparatus 7. The another read command makes the ICE to transmit data allocated in the area of the storage device of the ICE having a start address "0:0(H)" and data length of FF bytes. When the another read command is received by the ICE, the ICE responds to the another read command and transmits data stored in the storage device of the ICE to the data conversion unit 9 of the first peripheral device operation apparatus 7. Then, the data received from the ICE, i.e. the virtual drive is transferred to the personal computer 1 via the first peripheral device operation apparatus 7. Thus, the personal computer 1 can obtain the data stored in the storage device of the ICE through the first peripheral device operation apparatus 7 by sending the general read command to the virtual drive through the first peripheral device operation apparatus 7.

The first embodiment of the peripheral device operation system has an advantage over the prior-art computer system in communicating between the general purpose personal computer and the nonstandard peripheral device without specific preparations and operations. The peripheral device operation apparatus according to the present invention has an identification unit for instructing the personal computer to identify the nonstandard peripheral device as the standard peripheral device, thereby enabling the personal computer to identify the nonstandard peripheral device without a particular interface unit such as an interface board and a device drive for each of the nonstandard peripheral devices. In the peripheral device operation system according to the present invention, the general purpose personal computer can communicate with the nonstandard peripheral devices which are not conformed to the PnP devices as well as the standard peripheral devices which are conformed to the PnP devices.

Furthermore, the data received from the personal computer 1 is converted to the data format appropriate to the nonstandard peripheral device and transmitted to the nonstandard peripheral device, while the data received from the nonstandard peripheral device is converted to the data format appropriate to the personal computer 1 and transmitted to the personal computer 1. Therefore, the data transmitted from and to the nonstandard peripheral device can be treated as data allowed by the standard peripheral device such as the hard disk drive. As a result, the personal computer 1 can operate the nonstandard peripheral devices as well as the standard peripheral devices by executing the general purpose application programs.

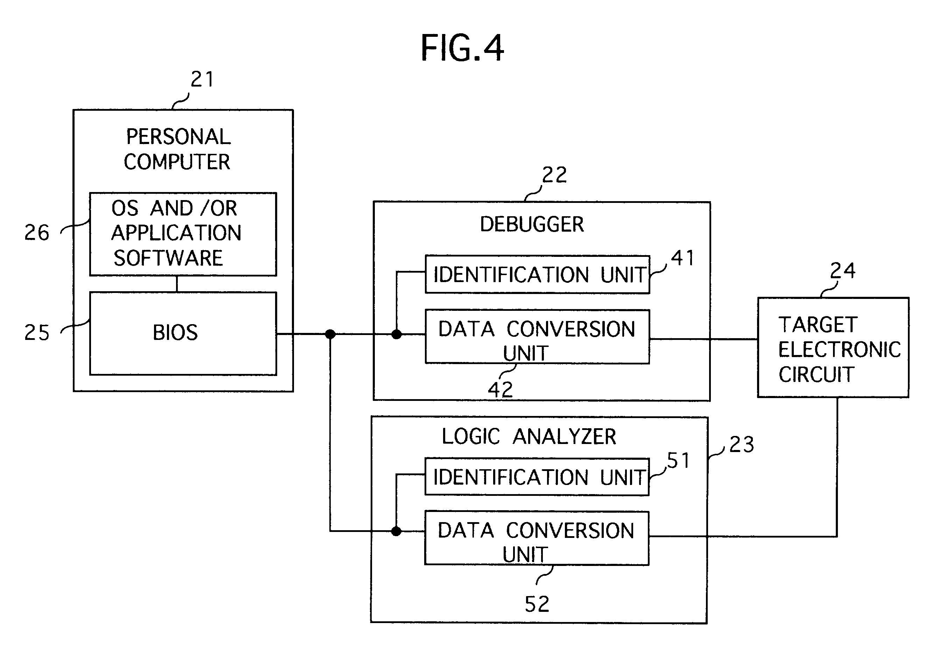

Referring to FIG. 4 of the drawings, a second preferred embodiment of a peripheral device operation system as comprising a nonstandard peripheral device according to the present invention will be described hereinlater.

As shown in FIG. 4, the peripheral device operation system comprises a debugger 22, a logic analyzer 23 and the personal computer 21. The debugger 22 and the logic analyzer 23 serve as the nonstandard peripheral devices which are controlled by the personal computer 21. The personal computer 21 includes a BIOS 25 for communicating with a predetermined standard peripheral device and OS and/or application software 26.

The debugger 22 are connected to a target electronic circuit 24 and used for testing software and hardware of the target electronic circuit 24, while the logic analyzer 23 is also connected to the target electronic circuit 24 and used for logically analyzing the target electronic circuit 24.

As shown in FIG. 4, the debugger 22 comprises an identification unit 41 and a data conversion unit 42. The identification unit 41 of the debugger 22 is designed to instruct the BIOS 25 of the personal computer 21 to identify the nonstandard peripheral device, i.e. the debugger 22, as the standard peripheral device. The data conversion unit 42 of the debugger 22 is designed to convert data received from the debugger 22 to a data format appropriate to the standard peripheral device to transmit the data from the debugger 22 to the BIOS 25 of the personal computer 21. The data conversion unit 42 of the debugger 22 is also designed to convert data received from the BIOS 25 of the personal computer 21 to a data format appropriate to the debugger 22 to transmit the data from the BIOS 25 of the personal computer 21 to the debugger 22.

Likewise, the logic analyzer 23 comprises an identification unit 51 and a data conversion unit 52. The identification unit 51 of the logic analyzer 23 is designed to instruct the BIOS 25 of the personal computer 21 to identify the nonstandard peripheral device, i.e. the logic analyzer 23, as the standard peripheral device. The data conversion unit 52 of the logic analyzer 23 is designed to convert data received from the logic analyzer 23 to a data format appropriate to the standard peripheral device to transmit the data from the logic analyzer 23 to the BIOS 25 of the personal computer 21. The data conversion unit 52 of the logic analyzer 23 is also designed to convert data received from the BIOS 25 of the personal computer 21 to a data format appropriate to the logic analyzer 23 to transmit the data from the BIOS 25 of the personal computer 21 to the logic analyzer 23.

The identification unit 41 of the debugger 22 has an identification character representing the standard peripheral device, for example, a hard disk drive. The identification unit 51 of the logic analyzer 23 has another identification character representing another standard peripheral device. Thus, the personal computer 21 can identify the debugger 22 and the logic analyzer 23 as the standard peripheral devices in accordance with the identification characters of the identification units 41 of the debugger 22 and the identification unit 51 of the logic analyzer 23.

It is unnecessary for the second embodiment of the peripheral device operation system to comprise a peripheral device operation apparatus interposed between the personal computer 21 and the nonstandard peripheral device. Therefore, the second embodiment of the peripheral device operation system can be more simplified in comparison with that of the first embodiment, although the second embodiment of the peripheral device operation system can achieve functions similar to those of the first embodiment.

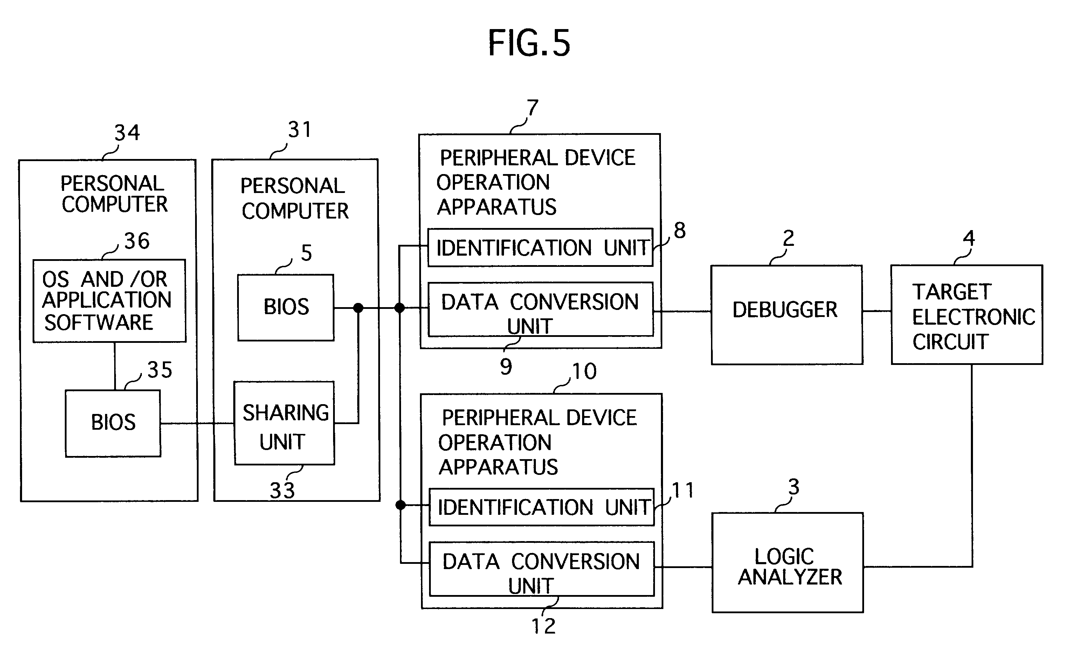

Referring to FIG. 5 of the drawings, a third embodiment of the peripheral device operation system adapted to a network system according to the present embodiment will be described hereinlater.

As shown in FIG. 5, the third embodiment of the peripheral device operation system is the same as the first embodiment shown in FIG. 1, except that the personal computer 1 in FIG. 1 is replaced with first and second personal computers 31 and 34 in FIG. 5. The same constitutional elements are respectively denoted by the same reference numerals as those of the first embodiment, with intention of omitting repeated description thereof.

The first personal computer 31 and the second personal computer 34 are linked with one another to construct a network such as a LAN or a WAN. The first personal computer 31 is directly connected to the debugger 2 and the logic analyzer 3, while the second personal computer 34 is not directly connected to the debugger 2 and the logic analyzer 3 in this embodiment.

The first personal computer 31 comprises a sharing unit 33 for enabling the first and second personal computers 31 and 34 to share standard peripheral devices (not shown) with each other. Although the sharing unit 33 is included only in the first personal computer 31 in this embodiment, the sharing unit 33 may be distributed over the first and second personal computers 31 and 34. Furthermore, the sharing unit 33 may comprise, but is not intended to be limited to, a typical network interface board and an NOS.

The second personal computer 34 comprises a BIOS 35 and OS and/or application software 36. The BIOS 35 enables a predetermined standard peripheral device to communicate with each other. The OS and/or application software 36 includes general purpose programs executed to operate the standard peripheral device directly connected to the personal computer 34. The OS and/or application software 36 of the second personal computer 34 may correspond not to a network computer but to a stand-alone computer. In thus constructed network system, the BIOS 35 of the second personal computer 34 can identify the standard peripheral devices which are not directly connected to the second personal computer 34 as the standard peripheral devices which are directly connected to the second personal computer 34.

In this embodiment, the BIOS 35 of the second personal computer 34 can identify the nonstandard peripheral device connected to the first personal computer 31 as the standard peripheral device directly connected to the second personal computer 34, because of the fact that the identification units 8 and 11 of the first and second peripheral device operation apparatuses 7 and 10 instruct the BIOS 35 of the second personal computer 34 to identify the debugger 2 and the logic analyzer 3 as the standard peripheral devices, respectively, through the sharing unit 33. Therefore, the second personal computer 34 can communicate with the nonstandard peripheral device which is directly connected not to the second personal computer 34 but to the first personal computer 31.

The data conversion units 9 and 12 of the first and second peripheral device operation apparatuses 7 and 10 are operated as described in the first and second embodiment, thereby enabling the second personal computer 34 to execute the general purpose application programs to operate the nonstandard peripheral devices connected to the first personal computer 31 as well as the standard peripheral devices connected to the second personal computer 34.

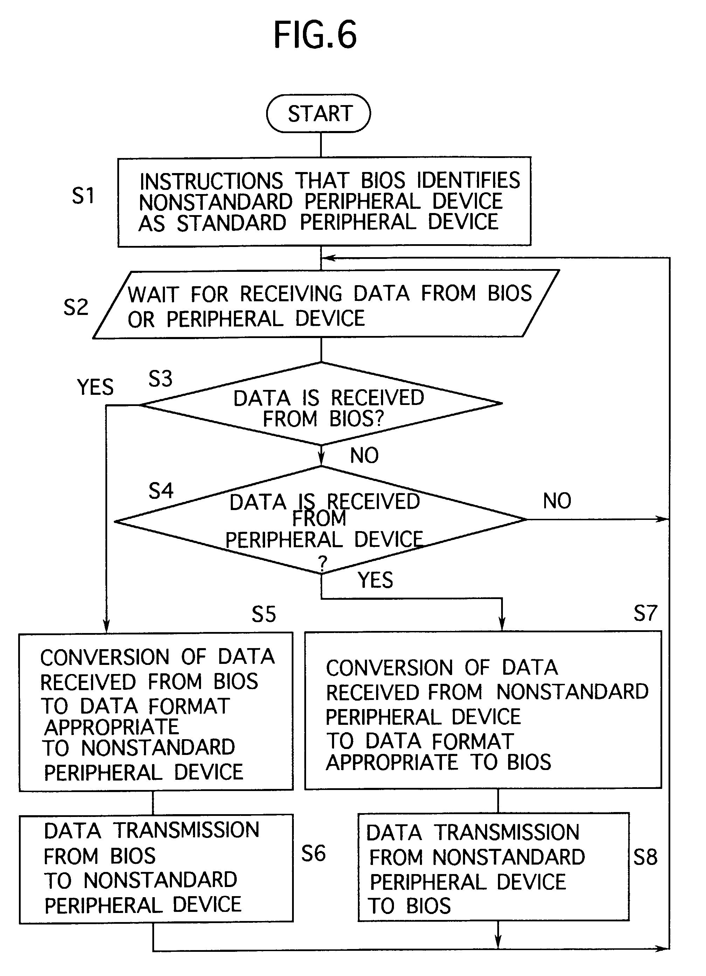

FIG. 6 is an overall outline flowchart showing the flow of processes common to the first through third embodiments of the peripheral device operation systems according to the present invention. The peripheral device operation systems can implement the communication between the peripheral devices including nonstandard peripheral devices (2, 3; 22, 23) and a calculation machine such as a personal computer (1; 21; 31, 34) or a workstation by executing a peripheral device operation program. The peripheral device operation program is stored in a program storage device, i.e. a floppy disk, a hard disk, a CD-ROM, a DVD-ROM, an EPROM or the like. The peripheral device operation program is installed in advance into each of the peripheral device operation apparatuses (7, 10) in the first and third embodiments, or into each of the nonstandard peripheral devices (22, 23) in the second embodiment. In the first and third embodiment, therefore, each of the peripheral device operation apparatuses (7, 10) executes the peripheral device operation program to perform a method of enabling the nonstandard peripheral device (2 or 3) to communicate with the calculation machine (1; 31, 34). In the second embodiment, each of the nonstandard peripheral devices (22, 23) executes the peripheral device operation program to perform a method of enabling itself (22 or 23) to communicate with the calculation machine (21).

Referring to FIGS. 1 and 6 of the drawings, it will be explained hereinafter how the method according to the present invention can be, by way of an example, performed by the first embodiment of the peripheral device operation system shown in FIG. 1. In particular, the nonstandard peripheral device is assumed to be the debugger 2 which is operated by the personal computer 1 though the first peripheral device operation apparatus 7 to communicate with the BIOS 5 of the personal computer 1.

As shown in FIG. 6, the method comprises steps S1 though S8. In the step S1, the identification unit 8 of the first peripheral device operation apparatus 7 instructs the BIOS 5 of the personal computer 1 to identify the debugger 2 as the standard peripheral device. In the step S2, the first peripheral device operation apparatus 7 waits for receiving data transmitted from the BIOS 5 of the personal computer 1 or the debugger 2. If the data is received from the BIOS 5 of the personal computer 1 or the debugger 2, the control is passed from the step S2 to the step S3. In the steps S3, a judgment is made upon whether the data is received from the BIOS 5 of the personal computer 1 or not. If the answer in the step S3 is in the affirmative "YES", the step S3 leads to the step S5 in which the data received from the BIOS 5 of the personal computer 1 is converted to a data format appropriate to the debugger 2 by the data conversion unit 9 of the first peripheral device operation apparatus 7. The converted data is transmitted from the BIOS 5 of the personal computer 1 to the debugger 2 through the first peripheral device operation apparatus 7 in the step S6. Then, the control is returned to the step S2.

If the answer in the step S3 is in the negative "NO", the step S3 leads to the step S4. In the step S4, a judgment is made upon whether the data is received from the debugger 2 or not. If the answer in the step S4 is in the affirmative "YES", the step S4 leads to the step S7 in which the data received from the debugger 2 is converted to a data format appropriate to the BIOS 5 of the personal computer 1 by the data conversion unit 9 of the first peripheral device operation apparatus 7. The converted data is transmitted from the debugger 2 to the BIOS 5 of the personal computer 1 through the first peripheral device operation apparatus 7 in the step S6. Then, the control is returned to the step S2. If the answer in the step S4 is in the negative "NO", the control is also returned to the step S2.

Therefore, by executing the peripheral device operation program, the peripheral device operation apparatus can perform the method of enabling the nonstandard peripheral device to communicate with the personal computer 1 without particular preparations and operations by a specially skilled person. This means that the present invention can provide a program storage device storing therein the peripheral device operation program which can perform the method as described above.

The many features and advantages of the invention are apparent from the detailed specification, and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described herein, and accordingly, all suitable modifications and equivalents may be construed as being encompassed within the scope of the invention.

## Claims

1. A peripheral device operation apparatus (7, 10) for enabling a nonstandard peripheral device (2, 3) to communicate with a calculation machine (1) such as a personal computer or a workstation, said calculation machine (1) including a basic input/output system (5) for communicating with a predetermined standard peripheral device, and said peripheral device operation apparatus (7, 10) comprising:
identification means (8, 11) for instructing said basic input/output system (5) of said calculation machine (1) to identify said nonstandard peripheral device (2, 3) as said standard peripheral device; and
conversion means (8, 12) for converting data received from said nonstandard peripheral device (2, 3) to a data format appropriate to said standard peripheral device to transmit the data from said nonstandard peripheral device (2, 3) to said basic input/output system (5) of said calculation machine (1), and converting data received from said basic input/output system (5) of said calculation machine (1) to a data format appropriate to said nonstandard peripheral device (2, 3) to transmit the data from said basic input/output system (5) of said calculation machine (1) to said nonstandard peripheral device (2, 3).

2. A peripheral device operation apparatus (7, 10) as set forth in claim 1, in which said calculation machine is referred to as a first calculation machine (31) and is connected to another calculation machine referred to as a second calculation machine (34),
said second calculation machine (34) including a basic input/output system (35) for communicating with said standard peripheral device, and
said peripheral device operation apparatus (7, 10) comprising enabling means for enabling said first and second calculation machines (31, 34) to share said standard peripheral device with each other, and recognition means for recognizing said nonstandard peripheral device (2, 3) as said standard peripheral device to communicate said nonstandard peripheral device (2, 3) through said first calculation machine (31).

3. A peripheral device operation apparatus (7, 10) as set forth in claim 1, in which said calculation machine is referred to as a first calculation machine (31) and is connected to another calculation machine referred to as a second calculation machine (34),
said second calculation machine (34) including a basic input/output system (35) for communicating with said standard peripheral device,
said identification means (8, 11) instructing said basic input/output system (5) of said second calculation machine (34) to identify said nonstandard peripheral device (2, 3) as said standard peripheral device, and
said conversion means (9, 12) for converting data received from said nonstandard peripheral device (2, 3) to a data format appropriate to said standard peripheral device to transmit the data from said nonstandard peripheral device (2, 3) to said basic input/output system (35) of said second calculation machine (34), and converting data received from said basic input/output system (35) of said second calculation machine (34) to a data format appropriate to said nonstandard peripheral device (2, 3) to transmit the data from said basic input/output system (35) of said second calculation machine (34) to said nonstandard peripheral device (2, 3).

4. A peripheral device operation apparatus (7, 10) as set forth in claim 1, in which said identification means (8, 11) instructs said basic input/output system (5) of said calculation machine (1) to identify said nonstandard peripheral device (2, 3) as a standard storage device.

5. A peripheral device operation apparatus (7, 10) as set forth in claim 4, in which said nonstandard peripheral device (2, 3) is a logic analyzer (3).

6. A peripheral device operation apparatus (7, 10) as set forth in claim 4, in which said nonstandard peripheral device (2, 3) is a debugger (2) such as an in-circuit emulator and a ROM debugger.

7. A nonstandard peripheral device (22, 23) controlled by a calculation machine (21) such as a personal computer or a workstation, said calculation machine (21) including a basic input/output system (25) for communicating with a predetermined standard peripheral device, comprising:
identification means (41, 51) for instructing said basic input/output system (25) of said calculation machine (21) to identify said nonstandard peripheral device (22, 23) as said standard peripheral device; and
conversion means (42, 52) for converting data received from said nonstandard peripheral device (22, 23) to a data format appropriate to said standard peripheral device to transmit the data from said nonstandard peripheral device (22, 23) to said basic input/output system (25) of said calculation machine (21) and converting data received from said basic input/output system (25) of said calculation machine (21) to a data format appropriate to said nonstandard peripheral device (22, 23) to transmit the data from said basic input/output system (25) of said calculation machine (21) to said nonstandard peripheral device (22, 23).

8. A nonstandard peripheral device (22, 23) as set forth in claim 7 in which said identification means (41, 51) instructs said basic input/output system (25) of said calculation machine (21) to identify said nonstandard device (22, 23) as a standard storage device.

9. A nonstandard peripheral device (22, 23) as set forth in claim 8 partially forming a logic analyzer (23).

10. A nonstandard peripheral device (22, 23) as set forth in claim 8 partially forming a debugger (22) such as an in-circuit emulator and a ROM debugger.

11. A peripheral device operation method of enabling a nonstandard peripheral device (2, 3) to communicate with a calculation machine such as a personal computer or a workstation, said calculation machine (1) including a basic input/output system (5) for communicating with a predetermined standard peripheral device, and said peripheral device operation method comprising the steps of:
instructing said basic input/output system (5) of said calculation machine (1) to identify said nonstandard peripheral device (2, 3) as said standard peripheral device;
converting data received from said nonstandard peripheral device (2, 3) to a data format appropriate to said standard peripheral device to transmit the data from said nonstandard peripheral device (2, 3) to said basic input/output system (5) of said calculation machine (1); and
converting data received from said basic input/output system (5) of saic calculation machine (1) to a data format appropriate to said nonstandard peripheral device (2, 3) to transmit the data from said basic input/output system (5) of saic calculation machine (1) to said nonstandard peripheral device (2, 3).

12. A peripheral device operation method as set forth in claim 11, in which saic calculation machine (1) is referred to as a first calculation machine (31) and is connected to another calculation machine referred to as a second calculation machine (34), saic second calculation machine (34) including a basic input/output system (35) for communicating with said standard peripheral device, said method comprising the steps of:
enabling said first and second calculation machines (31, 34) to share said standard peripheral device with each other;
making said basic input/output system (35) of said second calculation machine (34) recognize said nonstandard peripheral device (2, 3) as said standard peripheral device to communicate said nonstandard peripheral device (2, 3) through said first calculation machine (31).

13. A peripheral device operation method as set forth in claim 11, in which said calculation machine (1) is referred to as a first calculation machine (31) and is connected to another calculation machine referred to as a second calculation machine (34), said second calculation machine (34) including a basic input/output system (35) for communicating with said standard peripheral device,
said identification step including the step of instructing said basic input/output system (35) of said second calculation machine (34) to identify said nonstandard peripheral device (2, 3) as said standard peripheral device,
said conversion step having the steps of:
converting data received from said nonstandard peripheral device (2, 3) to a data format appropriate to said standard peripheral device to transmit the data from said nonstandard peripheral device (2, 3) to said basic input/output system (35) of said second calculation machine (34); and
converting data received from said basic input/output system (35) of said second calculation machine (34) to a data format appropriate to said nonstandard peripheral device (2, 3) to transmit the data from said basic input/output system (35) of said second calculation machine (34) to said nonstandard peripheral device (2, 3).

14. A program storage device storing therein a program executed by a peripheral device operation apparatus (7, 10) to perform a method of enabling a nonstandard peripheral device (2, 3) to communicate with a calculation machine such as a personal computer or a workstation, said calculation machine (1) including a basic input/output system (5) for communicating with a predetermined standard peripheral device, and said method comprising the steps of:
instructing said basic input/output system (5) of said calculation machine (1) to identify said nonstandard peripheral device (2, 3) as said standard peripheral device;
converting data received from said nonstandard peripheral device (2, 3) to a data format appropriate to said standard peripheral device to transmit the data from said nonstandard peripheral device (2, 3) to said basic input/output system (5) of said calculation machine (1); and
converting data received from said basic input/output system (5) of said calculation machine (1) to a data format appropriate to said nonstandard peripheral device (2, 3) to transmit the data from said basic input/output system (5) of said calculation machine (1) to said nonstandard peripheral device (2, 3).

15. A program storage device as set forth in claim 14, in which said calculation machine (1) is referred to as a first calculation machine (31) and is connected to another calculation machine referred to as a second calculation machine (34), said second calculation machine (34) including a basic input/output system (35) for communicating with said standard peripheral device, said method comprising the steps of:
enabling said first and second calculation machines (31, 34) to share said standard peripheral device with each other;
making said basic input/output system (35) of said second calculation machine (34) recognize said nonstandard peripheral device (2, 3) as said standard peripheral device to communicate said nonstandard peripheral device (2, 3) through said first calculation machine (31).

16. A program storage device as set forth in claim 14, in which said calculation machine (1) is referred to as a first calculation machine (31) and is connected to another calculation machine referred to as a second calculation machine (34), said second calculation machine (34) including a basic input/output system (35) for communicating with said standard peripheral device,
said identification step having the step of instructing said basic input/output system (35) of said second calculation machine (34) to identify said nonstandard peripheral device (2, 3) as said standard peripheral device,
said conversion step including the steps of:
converting data received from said nonstandard peripheral device (2, 3) to a data format appropriate to said standard peripheral device to transmit the data from said nonstandard peripheral device (2, 3) to said basic input/output system (35) of said second calculation machine (34); and
converting data received from said basic input/output system (35) of said second calculation machine (34) to a data format appropriate to said nonstandard peripheral device (2, 3) to transmit the data from said basic input/output system (35) of said second calculation machine (34) to said nonstandard peripheral device (2, 3).

17. A program storage device storing therein a program executed by a nonstandard peripheral device (22, 23) to perform a method of enabling said nonstandard peripheral device (22, 23) to communicate with a calculation machine (21) such as a personal computer or a workstation, said calculation machine (21) including a basic input/output system (25) for communicating with a predetermined standard peripheral device, and said method comprising the steps of:
instructing said basic input/output system (25) of said calculation machine (21) to identify said nonstandard peripheral device (22, 23) as said standard peripheral device;
converting data received from said nonstandard peripheral device (22, 23) to a data format appropriate to said standard peripheral device to transmit the data from said nonstandard peripheral device (22, 23) to said basic input/output system (25) of said calculation machine (21); and
converting data received from said basic input/output system (25) of said calculation machine (21) to a data format appropriate to said nonstandard peripheral device (22, 23) to transmit the data from said basic input/output system (25) of said calculation machine (21) to said nonstandard peripheral device (22, 23).

18. A peripheral device operation apparatus comprising a calculation machine (1; 31, 34) coupled with a nonstandard peripheral device (2, 3) through a peripheral device operation unit (7, 10) for enabling said nonstandard peripheral device (2, 3) to communicate with said calculation machine (1; 31, 34) such as a personal computer or a workstation, said calculation machine (1; 31, 34) including a basic input/output system (5; 35) for communicating with a predetermined standard peripheral device, and said peripheral device operation unit (7, 10) comprising:
identification means (8, 11) for instructing said basic input/output system (5; 35) of said calculation machine (1; 31, 34) to identify said nonstandard peripheral device (2, 3) as said standard peripheral device; and
conversion means (9, 12) for converting data received from said nonstandard peripheral device (2, 3) to a data format appropriate to said standard peripheral device to transmit the data from said nonstandard peripheral device (2, 3) to said basic input/output system (5; 35) of said calculation machine (1; 31, 34) and converting data received from said basic input/output system (5; 35) of said calculation machine (1; 31, 34) to a data format appropriate to said nonstandard peripheral device (2, 3) to transmit the data from said basic input/output system (5; 35) of said calculation machine (1; 31, 34) to said nonstandard peripheral device (2, 3).
